Europäisches Patentamt

European Patent Office

Office européen des brevets

(19)

(11) Veröffentlichungsnummer: **0 023 564**
**B1**

(12) # EUROPÄISCHE PATENTSCHRIFT

(45) Veröffentlichungstag der Patentschrift:
01.12.82

(51) Int. Cl.³: **C 01 F 7/02**

(21) Anmeldenummer: **80103495.0**

(22) Anmeldetag: **21.06.80**

(54) Verfahren zur Lagerung und Handhabung von Aluminiumhydroxidfeuchthydrat.

(30) Priorität: **11.07.79 US 56692**

(43) Veröffentlichungstag der Anmeldung:
**11.02.81 Patentblatt 81/6**

(45) Bekanntmachung des Hinweises auf die Patenterteilung:
**01.12.82 Patentblatt 82/48**

(84) Benannte Vertragsstaaten:
**AT BE CH DE FR GB IT LI NL SE**

(56) Entgegenhaltungen:
**DE-B-2 447 021**
**DE-B-2 517 218**

(73) Patentinhaber: **Degussa Aktiengesellschaft, Weissfrauenstrasse 9, D-6000 Frankfurt am Main 1 (DE)**

(72) Erfinder: **Christner, Hans, Dr., Auf dem Mühlberg 59, D-6000 Frankfurt am Main (DE)**
Erfinder: **Roebke, Wolfgang, Dr., Auguste-Viktoriastrasse 55, D-5040 Brühl (DE)**
Erfinder: **Ramelow, Herman, Tilsiterstrasse 15, D-6233 Kelkheim (DE)**
Erfinder: **Dittrich, Ewald, Albert Schweitzerstrasse 87, D-6451 Grosskrotzenburg (DE)**

EP 0 023 564 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Lagerung und Handhabung von Aluminiumhydroxidfeuchthydrat

Aluminiumhydroxidfeuchthydrat ist ein weisser, kristalliner Stoff mit einem spezifischen Gewicht von 2000 kg/m$^3$ und einem Schüttgewicht von 1200 kg/m$^3$. Es kann 55 bis 65 Gew.-% $Al_2O_3$ und 45 bis 35 Gew.-% $H_2O$ enthalten, vorzugsweise 58 Gew.-% $Al_2O_3$ und 42 Gew.-% $H_2O$.

Aluminiumhydroxidfeuchthydrat kann zu Natriumaluminat umgesetzt und dergestalt als Ausgangsmaterial für die Herstellung von Aluminiumsilikaten, wie z.B. von synthetischen Zeolithen, eingesetzt werden (vgl. z.B. DE-AS 24 47 021, DE-AS 25 17 218).

Für eine grosstechnische Verwendung des Aluminiumhydroxidfeuchthydrates jedoch ergeben sich Probleme, welche in den Eigenschaften des Aluminiumhydroxidfeuchthydrates begründet sind. So ist z.B. eine Silierung von Aluminiumhydroxidfeuchthydrat nicht möglich, weil es im Silo Brücken bildet, welche sich zementartig verfestigen und den gesamten Auslaufquerschnitt des Silos verschliessen. Diese Brückenbildung kann auch durch bekannte Austragshilfen nicht verhindert werden.

Es ist bekannt, Aluminiumhydroxidfeuchthydrat in Gruben zu lagern, aus welchen es mit Greifern über Krananlagen unter erheblichem technischen Aufwand herausgehoben und in den Weiterverarbeitungsprozess eingegeben wird.

Ein erheblicher Nachteil dieser Lagermethode ist die ungleichmässige Dosierung des Aluminiumhydroxidfeuchthydrates für die Weiterverarbeitung, wobei in der Regel Schwankungen von bis zu 20 kg pro aus der Lagergrube entnommener Charge Aluminiumhydroxidfeuchthydrat auftreten können.

Weiterhin erfordert die Lagerung von grossen Mengen Aluminiumhydroxidfeuchthydrat in Gruben flächenmässig einen grossen Aufwand an Raum.

Es besteht somit das Bedürfnis, eine Form für die Handhabung und Lagerung des Aluminiumhydroxidfeuchthydrates zu finden, welche eine genaue Dosierung ermöglicht und wenig Raumaufwand bedarf.

Die Lagerung und Handhabung in der bekannten Form ist zudem sehr zeitaufwendig, personalintensiv und unfallträchtig. Darüberhinaus ist das Aluminiumhydroxidfeuchthydrat bei nicht überdachten Lagern noch zusätzlich Witterungseinflüssen ausgesetzt, wodurch eine unerwünschte Qualitätsverschlechterung des pulverförmigen Aluminiumhydroxidfeuchthydrates eintreten kann.

Gegenstand der vorliegenden Anmeldung ist ein Verfahren zur Lagerung und Handhabung von Aluminiumhydroxidfeuchthydrat, welches dadurch gekennzeichnet ist, dass man das Aluminiumhydroxidfeuchthydrat, gegebenenfalls in Chargen mittels Kippwagen (1), in einem Kastenbeschicker (2), welcher mit einem Transportmittel (3), z.B. Plattenband, ausgerüstet ist, ablädt, das Aluminiumhydroxidfeuchthydrat über eine Transportvorrichtung, z.B. einen Doppelgurt-Senkrechtförderer (4) und gegebenenfalls über eine Bandwaage (5), in den Aluminiumhydroxidfeuchthydratsuspensionstank (6) gibt, wo eine Vermischung mit einer der Menge Aluminiumhydroxidfeuchthydrat entsprechende Menge wässriger Natronlauge zur Herstellung einer Suspension des Aluminiumhydroxidfeuchthydrates erfolgt und durch Aufheizen über die Dampfzuleitung (9) auf eine Temperatur zwischen 20 und 100°C und unter Rühren mit dem Rührer (8) eine pump- und dosierfähige Suspension des Aluminiumhydroxidfeuchthydrates herstellt.

In einer bevorzugten Ausführungsform der Erfindung kann die Suspension des Aluminiumhydroxidfeuchthydrates in wässriger Natronlauge einen Gehalt von 29 bis 49 Gew.-% $Al_2O_3$ mit einem Gehalt an $Na_2O$ von 6 bis 19 Gew.-%, einen Gehalt an Wasser von 41 bis 56 Gew.-% und eine Temperatur von 20 bis 100°C, vorzugsweise zwischen 70 und 95°C aufweisen. Bevorzugterweise kann in der Suspension des Aluminiumhydroxidfeuchthydrates eine Konzentration an $Al_2O_3$ von 41 bis 47 Gew.-% vorhanden sein, wobei als Natronlauge eine 50 Gew.-% wässrige Natronlauge verwendet wird.

In einer weiteren Ausführungsform kann die wässrige Natronlauge einen Gehalt von an $Na_2O$ von 39 Gew.-% und einen Wassergehalt von 61 Gew.-% (50 Gew.-% NaOH) aufweisen.

Bevorzugterweise kann mit dem angemeldeten Verfahren ein Aluminiumhydroxidfeuchthydrat gelagert werden, welches einen $Al_2O_3$-Gehalt von 57 bis 60 Gew.-% und einen Wassergehalt von 40 bis 43 Gew.-% aufweist.

Durch das erfindungsgemässe Verfahren ist es möglich, mit einfachster, automatisierter Handhabung einen Vorrat an teilweise gelöstem, lagerstabilem Aluminiumhydroxidfeuchthydrat in Form einer Suspension herzustellen.

Von grossem und überraschendem Vorteil ist die durch das erfindungsgemässe Verfahren gegebene Möglichkeit der genauen Einstellung des $Al_2O_3$-$Na_2O$-Verhältnisses, welches eine wichtige Voraussetzung z.B. für die Herstellung von Aluminiumsilikaten ist.

Von weiterem Vorteil ist, dass die wässrige Suspension des Aluminiumhydroxidfeuchthydrates über einen Zeitraum von mindestens 48 Stunden sedimentationsstabil ist, so dass in einem Lagertank das Rührwerk entsprechend lange stillgelegt werden kann, wie es z.B. bei Stromausfall oder Triebwerkschaden notwendig sein kann, ohne dass sich feste Bodenkörper bilden. Sie ist auch bei Raumtemperatur bis 41 Gew.-% $H_2O$ noch gut fliess- und pumpfähig. Sie weist bei diesem hohen Feststoffanteil ein nicht-newtonsches Fliessverhalten auf, d.h., ihre Viskosität ist abhängig vom Schergefälle.

Das erfindungsgemässe Verfahren zur Lagerung von Aluminiumhydroxidfeuchthydrat weist weiter den grossen und überraschenden Vorteil auf, dass mit seiner Hilfe grosse Mengen an Aluminiumhydroxidfeuchthydrat auf relativ kleinem Raum gelagert werden können. Dabei ist zu berücksichtigen, dass die wässrige Suspension des Aluminiumhydroxidfeuchthydrates in Tanks von technisch üblicher Grösse, vorzugsweise bis 250 m³ gelagert werden kann.

Aus diesem Tank kann dann die Suspension, deren Konzentration genau dosiert werden kann, mittels einer Dosierpumpe zur Weiterverarbeitung gleichmässig in kontrollierten Mengen entnommen werden.

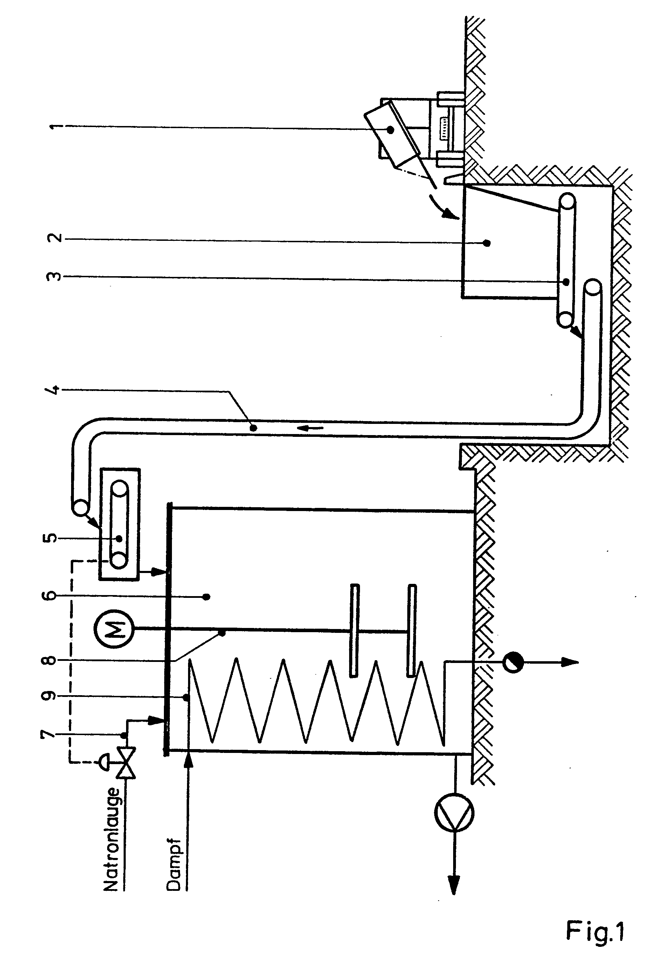

Das erfindungsgemässe Verfahren wird anhand der Fig. 1 näher erläutert.

Fig. 1 zeigt in einer schematischen Darstellung den Ablauf des erfindungsgemässen Verfahrens.

Gemäss der Fig. 1 wird mittels des Strassenkippers (1) das Aluminiumhydroxidfeuchthydrat in den unter Flur angeordneten Kastenbeschicker (2) abgeladen. Der mit dem Plattenband (3) als Transportmittel ausgerüstete Kastenbeschicker (2) gibt das Aluminiumhydroxidfeuchthydrat kontinuierlich dem Doppelgurtsenkrechtförderer (4) auf. Der Doppelgurtsenkrechtförderer (4) gibt das Aluminiumhydroxidfeuchthydrat der Messbandwaage (5) auf, wo es verwogen wird. Das verwogene Aluminiumhydroxidfeuchthydrat wird in den Suspensionslagertank (6) gegeben und eine der abgewogenen Menge des Aluminiumhydroxidfeuchthydrates entsprechenden Menge wässriger Natronlauge hinzugegeben. Über die Zuleitung (9) wird der erhaltene Slurry aufgeheizt und mittels Rühren mit dem Rührer (8) eine pump- und dosierfähige Suspension des Aluminiumhydroxidfeuchthydrates hergestellt.

Das erfindungsgemässe Verfahren zur Lagerung des Aluminiumhydroxidfeuchthydrates wird anhand des folgenden Beispiels näher erläutert und beschrieben:

Beispiel

Die Suspension wird grosstechnisch im Rührwerkbehälter von 255 m³ Schlankheitsgrad H/D = 1,2 hergestellt. Zum Homogenisieren befindet sich darin ein Rührwerk, langsam laufend mit 16,5 U/min. ausgerüstet mit einem 3stufigen Kreuzbalkenrührer. Ferner sind 2 Stromstörer zur besseren Homogenisierung eingebaut. Der Behälterinhalt wird mit Heizdampf von 7 bar beheizt, die Temperatur von 85°C wird geregelt.

Die ankommende Feuchthydratladung mit ca. 30 t wird verwogen, in den Kastenbeschicker abgekippt. Das Aluminiumhydroxidfeuchthydrat weist einen Gehalt von $Al_2O_3$ von 58 Gew.-% und einen Wassergehalt von 42 Gew.-% auf. Die entsprechende Natronlaugenmenge mit 39 Gew.-% $Na_2O$ wird in der Messwarte vorgewählt. Sie beträgt für eine gewünschte Suspension mit 43 Gew.-% $Al_2O_3$, bezogen auf die Gesamtsuspensionsmenge, 10 600 kg, d.h. es werden entsprechend 7,1 m³ Natronlauge zugegeben.

Bei laufendem Behälterrührwerk wird die Beschickung in Gang gesetzt, dabei wird das Aluminiumhydroxidfeuchthydrat aus dem Kastenbeschicker über ein Plattenband, einen Senkrechtgutförderer und eventuell eine Bandwaage mit einer Förderleistung von 30 t/h und die vorgewählte Natronlaugenmenge aus einem Vorratstank über eine Kreiselpumpe und einen Mengenzähler in den Lagertank befördert. In dem Lagertank wird das Aluminiumhydroxidfeuchthydrat in der Natronlauge suspendiert, wobei das erhaltene Aluminiumoxid teilweise gelöst wird. Die Temperatur der erhaltenen Suspension wird auf 85°C mit Dampf aufgeheizt.

Die so erhaltene Suspension wird im Rührwerkbehälter bei unverändert mit 16,5 U/min. laufendem Rührwerk (mehrstufiger Kreuzbalkenrührer) gelagert. Wird die Suspension für den Produktionsprozess benötigt, wird diese über Dosierpumpen abgezogen.

## Patentansprüche

1. Verfahren zur Lagerung und Handhabung von Aluminiumhydroxidfeuchthydrat, gegebenenfalls in Chargen, mittels Kippwagen (1), in einem Kastenbeschicker (2), welcher mit einem Transportmittel (3), z.B. Plattenband, ausgerüstet ist, ablädt, das Aluminiumhydroxidfeuchthydrat über eine Transportvorrichtung, z.B. einen Doppelgurt-Senkrechtförderer (4), und gegebenenfalls über eine Bandwaage (5) in den Aluminiumhydroxidfeuchthydratsuspensionstank (6) gibt, wo eine Vermischung mit einer der Menge Aluminiumhydroxidfeuchthydrat entsprechenden Menge wässriger Natronlauge zur Herstellung einer Suspension des Aluminiumhydroxidfeuchthydrates erfolgt und durch Aufheizen über die Dampfzuleitung (9) auf eine Temperatur zwischen 20 und 100°C und unter Rühren mit dem Rührer (8) eine pump- und dosierfähige Suspension des Aluminiumhydroxidfeuchthydrates hergestellt.

2. Verfahren nach Anspruch 1, dadurch gekennzeichnet, dass die Suspension des Aluminiumhydroxidfeuchthydrates in wässriger Natronlauge einen Gehalt von 29 bis 49 Gew.-% $Al_2O_3$, einen Gehalt an $Na_2O$ von 6 bis 19 Gew.-%, einen Gehalt an Wasser von 41 bis 56 Gew.-% und eine Temperatur von 20 bis 100°C, vorzugsweise zwischen 70 und 95°C aufweist.

3. Verfahren nach Anspruch 1, dadurch gekennzeichnet, dass die wässrige Natronlauge einen $Na_2O$-Gehalt von vorzugsweise 39 Gew.-% und einen Wassergehalt von 61 Gew.-% aufweist (NaOH 50 Gew.-%).

## Claims

1. A process for storing and handling wet hydrated aluminium hydroxide, characterised in that the wet hydrated aluminium hydroxide is unloaded, optionally in batches, by means of tipping wagons (1), into a charging tank (2) which is equipped with transport means (3), for example a plate conveyor, the wet hydrated aluminium hydroxide is introduced into the wet hydrated aluminium hydroxide suspension tank (6) via a transport device, for example a twin-belt elevator (4), and optionally via a conveyor type weigher (5), in which suspension tank (6) it is mixed with a quantity of aqueous sodium hydroxide corresponding to the quantity of wet hydrated aluminium hydroxide to produce a suspension of the wet hydrated aluminium hydroxide, and a pumpable and meterable suspension of the wet hydrated aluminium hydroxide is produced by heating with the steam supply line (9) to a temperature of from 20 to 100°C and with stirring using the stirrer (8).

2. A process according to claim 1, characterised in that the suspension of the wet hydrated aluminium hydroxide in aqueous sodium hydroxide contains from 29 to 49% by weight of $Al_2O_3$, from 6 to 19% by weight of $Na_2O$, from 41 to 56% by weight of water and has a temperature of from 20 to 100°C, preferably from 70 to 95°C.

3. A process according to claim 1, characterised in that the aqueous sodium hydroxide preferably contains 39% by weight of $Na_2O$ and contains 61% by weight of water (NaOH 50% by weight).

**Revendications**

1. Procédé pour le stockage et la manutention d'hydrate humide d'hydroxyde d'aluminium, caractérisé en ce que l'on décharge l'hydrate humide d'hydroxyde d'aluminium, éventuellement, par charges séparées, au moyen de chariots basculants (1), dans un caisson de chargement (2) qui est équipé d'un moyen de transport (3), par exemple un transporteur à palettes, que l'on amène l'hydrate humide d'hydroxyde d'aluminium à l'aide d'un dispositif de transport, par exemple un transporteur vertical à double courroie (4), en passant éventuellement sur une bascule intégratrice pour bande transporteuse (5) dans le réservoir (6) à suspension d'hydrate humide d'hydroxyde d'aluminium, où s'effectue un mélange avec une quantité de lessive de soude caustique aqueuse correspondant à la quantité d'hydrate humide d'hydroxyde d'aluminium, afin d'obtenir une suspension de l'hydrate humide d'hydroxyde d'aluminium, et prépare par chauffage à l'aide de la conduite d'amenée de vapeur (9), à une température comprise entre 20 et 100°C, et sous agitation avec un agitateur (8), une suspension de l'hydrate humide de l'hydroxyde d'aluminium capable d'être pompée et dosée.

2. Procédé selon la revendication 1, caractérisé en ce que la suspension d'hydrate humide d'hydroxyde d'aluminium dans la lessive de soude caustique aqueuse, présente une teneur de 29 à 49% en poids d'$Al_2O_3$, une teneur en $Na_2O$ de 6 à 19% en poids, une teneur en eau de 41 à 56% en poids et une température de 20 à 100°C, de préférence 70 à 95°C.

3. Procédé selon la revendication 1, caractérisé en ce que la lessive de soude caustique aqueuse présente une teneur en $Na_2O$ de préférence de 39% en poids et une teneur en eau de 61% en poids (NaOH 50% en poids).

0 023 564

Fig.1

Natronlauge

Dampf